# EUROPEAN PATENT SPECIFICATION

(11) **EP 3 766 350 B1**
(45) Date of publication and mention of the grant of the patent: **16.09.2026**
(21) Application number: 19219977.6
(22) Date of filing: 30.12.2019
(51) Int. Cl.: B27K 3/50, A01N 25/02, A01N 25/10, A01N 25/24, A01N 43/16, A01P 3/00, C08L 3/02, A01N 55/00

(54) **COMPOSITON FOR THE PRESERVATION OF WOODEN HISTORICAL OBJECTS**
ZUSAMMENSETZUG FÜR KONSERVIERUNG VON HISTORISCHEN HOLZGEHGENSTÄNDE
COMPOSITION POUR LA CONSERVATION DES OBJEKTS HISTORIQUES EN BOIS

(30) Priority: 19.07.2019 PL 43066119
(43) Date of publication of application: 20.01.2021
(73) Proprietor: Digi-Pack Sp. z o.o., 63-400 Ostrów Wielkopolski (PL)
(72) Inventor: MAZELA, Bart omiej, 61-058 Pozna (PL); PERDOCH, Waldemar, 63-006 Krerowo (PL); NOWAK, Tomasz, 60-194 Pozna (PL)
(74) Representative: Piatkowska, Elzbieta

(56) References cited:
- CN-A- 109 629 326
- CN-B- 107 779 122
- JP-A- 2010 125 814
- JP-A- 2016 011 392
- PL-B1- 235 395
- US-A- 4 540 777
- US-A1- 2019 112 494

## Description

The present invention relates to an agent for the preservation of wooden historical objects and method of its production.

Contemporary protection and preservation of monuments, which constitute cultural heritage, are increasingly using interdisciplinary knowledge, tools and techniques. This is particularly important in the case of preservation and restoration of wooden historical objects, in which physical, chemical and biological corrosion has led to changes in both technical and aesthetic-artistic properties. Historical wood, depending on the thermal and humidity conditions in which it is located, changes its structure, shape, dimensions, as well as colour, drawing and texture. If these processes are not consciously prevented by appropriate preservation actions, they eventually start to threaten the existence of historical objects, leading to their destruction.

Since the 1950s, the use of synthetic resins has been widespread in the field of preservation and restoration to strengthen the damaged wood. Polyvinyl chloride, known under the trade name Vinoflex, polyvinyl acetate, and then acrylic copolymers of an Osolan type, epoxy resins, etc. were introduced to the wide practice. These materials had many advantages over the previously used glutin glues, natural resins and waxes, so at the time, their induction was considered as a major achievement. It turned out with time, that they have significant disadvantages, and the impregnation strengthening procedure by itself is burdened with very unfavourable side effects. The impregnating method of damaged wood with synthetic resins (e.g. Paraloid B-72 for dry wood) is still widely used. In many cases, preservation works carried out with the use of existing preparations did not bring the expected results. First of all, it concerns the lack of improvement of strength properties of the preserved wood, and also the negative impact on surface finishing of a wooden monument (i.e. painting, polychromy, etc.).

Wood is characterised by anisotropic structure and high affinity to water. Both these features directly translate into the dimensional stability of a wooden monument, and thus into its durability in relation to biological decomposition factors. Increased water sorption also reduces the strength properties of historical objects. Currently used agents for wood preservation do not combine both, which are so important from the point of view of object durability, functions i.e. hydrophobisation of the surface and consolidation of the damaged structure.

Archaeological monuments are those freshly acquired from archaeological sites as well as those exhibited in museums and preserved many years ago with the use of various means and methods. Objects freshly acquired from water or soil require the use of wet wood preservatives for effective strengthening and dimensional stability. On the other hand, monuments that were previously preserved often require renovation or even removal of previously applied substances to protect the wood tissue from further decomposition or to achieve more satisfactory aesthetic effects. Archaeological objects which, as a result of the research, were first dug out and then buried after the earthworks were finished are another problem. It was shown that such practices have a negative effect on the condition of historical wood, because as a result of disturbed anaerobic conditions and natural moisture balance, secondary development of fungi and bacteria occurs, which leads to the destruction of wood tissue.

The most commonly used methods of preservation of archaeological wood include: drying by alcohol-ether method, freeze drying, i.e. freezing and sublimation, slow drying with oil preservation, alum method, polyethylene glycol (PEG) preservation method, synthetic resins impregnation method (resol, urea-formaldehyde) in solvent mixes (alcohol, glycol, water). Other methods described in patents (PL 130 387, US 5789087, US 6432553) can also be used to prevent deformation of archaeological wood caused by collapse of cell walls during the drying process.

Currently, the most popular agent for the preservation of wet archaeological wood is polyethylene glycol (PEG), perfectly soluble both in water and in alcohol (ethanol, methanol or isopropanol). PEG, replacing water molecules, has the ability to penetrate deeply into degraded wood tissue, strengthening its structure and improving dimensional stability [Journal of molecular structure, 735, 267-270]. Unfortunately, under conditions of high air humidity (above 80%), the hygroscopicity of PEG increases rapidly, as a result of which wood impregnated with it absorbs water very intensively. This leads to its strong swelling and cracking [Journal of Cultural Heritage, 31, 133-140]. Under the influence of liquid water, the water-soluble PEG is washed out. Wood devoid of the consolidating substance irreversibly cracks, shrinks and deforms [Fracture and fatigue in wood, John Wiley & Sons]. It was also shown that the PEG may react with other chemical compounds, such as iron and sulphur compounds, often present in archaeological wood. As a result of the oxidation reaction, low molecular organic acids (formic acid, glycolic acid, oxalic acid) are formed, causing both depolymerisation of polyethylene glycol and progressive degradation of the object preserved by it [Holzforschung, 67(6), 707-714, Holzforschung, Vol. 62, pp. 694-703, Proceedings of the National Academy of Sciences, 102(40), 14165-14170].

The most important disadvantages of the archaeological wood preservation methods used so far include: excessive volume and linear shrinkage of wood as a result of drying, leading to deformation of the original shape of the object, significant colour change in relation to natural colour, insufficient protection against biological and chemical corrosion, excessive hygroscopicity leading to volume changes and, as a result, cracking at variable humidity of the environment, excessive plasticisation of wood, undesirable increase in the weight of impregnated wood, duration of preservation (tedious and long lasting treatments related to the preservation process itself as well as to finishing processes, i.e. drying).

Unexpectedly, some organosilicon compounds, including alkoxysilanes, were found to be an alternative to PEG. Until now, they have been used mainly to increase the durability of modern wood, reducing its hydrophilicity and thus its biodegradability [Holzforschung, Vol. 60, pp. 40-46; Holz als Roh-und werkstoff, 65(1), 35; Holzforschung, Vol. 58, pp. 316-325; European Journal of Wood and Wood Products, 72(2), 243-248; Wood Science and Technology, 37(6), 453-461; International Biodeterioration & Biodegradation, 63(4), 456-461; Journal of applied polymer science, 88(12), 2828-2841; Composites Part A: Applied Science and Manufacturing, 41(7), 806-819]. Due to the presence of reactive groups, these compounds can form permanent Si-O-C and Si-O-Si bonds with the surface of wood, reducing its hydrophilicity and thus eliminating undesirable properties of this material, such as susceptibility to biological corrosion [Cellulose, 20(6), 3131-3141]. Wood saturated with alkoxysilane solution is resistant to brown rot fungi. The positive effect of organosilicon compounds on the dimensional stability of wood modified with them was also confirmed [Proceedings of: the 8th ICOM group on Wet Organic Archaeological Materials conference, Stockholm: 614-615; Re-conservation of wood from the seventeenth-century Swedish warship the vasa with alkoxysilanes: A Re-treatment Study Applying Thermosetting Elastomers (Doctoral dissertation, Texas A & M University)]. Alkoxysilanes usually hydrolyse and condense in the aquatic environment, therefore, in combination with hydrophobic and fungistatic effects, they potentially provide an effective solution for the preservation of wet archaeological wood as an alternative to traditionally used agents such as polyethylene glycols. The water content of wood ensures the hydrolysis of alkoxysilanes and their binding in the wood tissue, thus preventing cell wall colapsaction and, consequently, the cracking and deformation of the wood. The chemical bonding of silanes with wood, contrary to the previously used solutions, prevents their leaching, thus protection of archaeological wood against drying out and biological decomposition is durable and effective. Due to their unique properties, including the possibility of functionalisation, alkoxysilanes, as well as other organofunctional siloxanes and organofunctional siloxanes, prove to be effective compounds used for dimensional stabilisation and thus preservation of wet archaeological wood. There are also numerous known solutions in which starch modified with organosilicon compounds is directly introduced into the paper (US4540777 A; US2019/0112494 A1). The obtained effects described in these solutions contributed to the novelty of the solution in terms of increasing the hydrophobic properties of materials, i.e. in terms of increasing their resistance to the effects of liquid water. This issue was confirmed, inter alia, by presenting the results of the measurement of the wetting angle, (>100°). There are also studies (JP 2016011392A) in which mixtures of starch, silanes and nanocellulose in a dispersion of alcohol and water were introduced into, which in the context of interactions and hydrogen bonds present in the paper significantly change the specificity of the entire system (among others PloSone, 11 (5), e0155809). Therefore it is obvious that the dispersion prepared in various solvents will have different functional properties than the water dispersion. This solution, according to the description, primarily increases the barrier properties, and not the hydrophobic properties, resistance to biological agents and UV radiation.

There are also known publications disclosing mixtures of starch and nanocellulose (CN 107 779 122 B) which promote primarily adhesion to cellulosic materials (paper). Similarly, there are known publications in which organosilicon compounds and nanocellulose have been combined to give the papers hydrophobic and barrier properties (JP 2010 125814A), as well as hydrophobic and mechanical properties (CN 109 629 326A). There are also known polymers, whose use in the preservation of monuments, especially wooden ones, potentially brings benefits in the form of using a less aggressive component, which after preservation is emitted into the environment.

One such polymer is starch, which is perceived as one of the most attractive biopolymers due to its availability and low price (0.25-0.6 USD/kg). It is a polysaccharide of plant origin, the source of which are, amongst others, roots (e.g. sweet potatoes, tapioca), tubers (e.g. potatoes), stems (e.g. palm sago), cereal grains (e.g. corn, rice, wheat, barley, oats, sorghum) and legume seeds (peas and beans) [Starch 37:1]. It has thermoplastic properties, is biodegradable and is recyclable. The disadvantages of the material are low mechanical properties, high moisture sorption and brittleness, which make its industrial use limited [Composites Part A: Applied Science and Manufacturing, 42(1), 30-40]. In particular, new methods of starch modification are being sought to reduce its sorption properties and thus increase its hydrophobic properties.

Starch is a product that is widely used in the industry. It is mostly used in the food sector as a filler, binding agent, viscosity regulator and paper sector as an auxiliary agent that modifies the properties of paper products [Potato developments in a changing Europe, 215-225]. Native or modified cationic starch is added to the pulp in order to increase its strength as a binding agent and to give it hydrophobic properties. Due to the high starch losses (low retention of native starch in particular), it is much more common to add starch in the form of a film to a pre-formed paper on a surface sizing press. This method allows to significantly strengthen the paper surface and improve its strength parameters with minimal losses of substances [Asian Journal of Chemistry, 23(7), 3151]. As in the case of bonding in the pulp, when surface sizing, better consolidation of the material and consequently higher strength is achieved using cationic starch, which provides stronger bonds between the fibres [Paper technology, 39,37-41], but due to the low price, native starch is mainly used in the production of paper. The biggest advantage of starch in terms of surface consolidation are its adhesive properties, the possibility to freely regulate the viscosity by changing the concentration and degree of polymerisation. Starch is also used as a base for coating substances. An example is a bio-latex based on starch containing plasticisers, softeners, skimmers and PVA as in CN105696412A patent or with the addition of pigments and fillers, e. g. US3869296A. It is known to use surface modification of boards made of mineral wool, in which a thermally fixed coating based on starch with urea as an additive, formed a hard, rigid and thin outer layer, which gives the product increased strength parameters. Cunha and Gandini [Journal of colloid and interface science, 344(2), 588-595] discussed in detail the possibilities related to hydrophobisation of polysaccharides, in particular cellulose. The authors presented a number of methods of increasing cellulose water resistance by dividing them into two groups, i.e. chemical modification and impregnation. Despite numerous reports indicating the possibility of increasing hydrophobic properties of cellulose (e.g. use of alkyd ketone dimers, transesterification reaction, modification and impregnation with silanes), it was found that this issue is still at the initial stage of research and further work in this field is necessary. The most commonly used starch hydrophobisation methods are chemical modifications leading to the formation of starch esters by means of esterification or transesterification reactions. In this method, the hydrophobicity effect was achieved by reducing the surface energy (especially its polar component) associated with the replacement of hydroxyl groups with less polar ester groups [Cellulose, 17(6), 1045-1065]. Thiebaud et al. [Journal of Applied Polymer Science, 65(4), 705-721] described the method of starch esterification with organic compounds containing eight-carbon and ten-carbon chains, thanks to which the resulting product was characterised by higher hydrophobicity (wetting angle 85-95°). Chi et al. [Food research international, 40(2), 232-238] using amber anhydride (Dodecenyl succinic anhydride) they obtained modified starch with superhydrophobic properties (wetting angle 123°) by the catalytic reaction in an alkaline environment. From the description of inventions US2961339A and US4540777, solutions are known in which new loose starch modified with alkali-silanes in the form of alkali metal salts is produced. In these descriptions, granular starch was first treated with an aqueous solution of alkali metal salts of alkyl silicates, such as sodium methyl silicate, and then dried with air at a temperature close to room temperature. The modification resulted in an increase in hydrophobicity of dried granules formed as a result of interactions between the surface of starch and alkyl silane during drying. In addition, the new siliconised granular starch was characterised by neutral pH, and in the form of dry powder, had properties of mobility and flow almost equal to liquids. Another advantageous feature of the product was that it was resistant to water at temperatures up to 50°C. The addition of modified starch to water at (or near) gelation temperature makes it capable of forming smooth pastes and dispersions. According to the invention, modified starch did not characterise itself by increased strength properties. The invention described in US3071492 presents a method for obtaining starch in powder form and with increased hydrophobic properties. Hydrophobisation was achieved by the addition of water-soluble silicones. The hydrophobic mixture was prepared at a temperature lower than the starch gelatinisation temperature (<60°C). From the description of the invention EP0119507A1, the solution of starch modification by means of silanes is known. Modification is carried out by bringing the starch into contact in the presence of alkali metals hydroxides or alkali metal aluminates to silane hydrolysates. Preferably, this occurs in an aqueous solution of silane hydrolysate, wherein the additives can be used either as an aqueous solution or in solid form. The aluminate or hydroxide of alkali metal must be present at least in such a quantity that 0.4 mole of aluminate is present per mole of silane. The description of the invention includes a description of modifications with both alkylalkoxysilanes and organofunctional alkoxysilanes. According to the authors of the invention, modified starch shows better processing properties than the corresponding unmodified starch. Patent WO2015/004593 describes an innovative method of producing a bioelastomer containing a cross-linked matrix in which the organic phase is dispersed. The bioelastomer consists of cross-linked polysiloxanes in which starch has been dispersed. Organosilicon compounds contained acetyl group, which during the process acetylated the starch, resulting in a hydrophobic bioelastomer.

Patent US5009648 presents an invention in the form of stoma pouches, which are made of starch and polyethylene with the addition of organosilicon compounds that increase the hydrophobicity of the obtained product. The methods described above allow the starch to be modified to increase its hydrophobicity. The inventions described above do not relate to the strength properties of modified starch, and to changes in the strength of the material protected by modified starch. This issue is important in so far as it is known from the practice connected with preservation preparations and from literature reports that some organosilicon compounds reduce the strength properties of protected lignocellulosic materials. At present, there are no comprehensive studies on the improvement of strength properties and on the potential benefits of starch modification with organosilicon compounds. The literature on the subject focuses on the two issues separately, and starch modification is carried out either in terms of increasing its hydrophobicity or increasing its strength properties.

Methods of consolidation of lignocellulosic materials use nanocellulose obtained as a result of various processes (CNF - fibrous nanocellulose, CNC - crystalline nanocellulose, BNC - bacterial nanocellulose). Literature reports [among others Applied microbiology and biotechnology, 100(5), 2063-2072; Heritage science, 5(1), 1-17] describe new methods of stabilisation of historical papers with the use of nanocellulose suspensions. In terms of strength properties, paper preservation by means of nanocellulose has similar effects as the commonly used Japanese paper preservation. Herrera et al. [Cellulose, 24(9), 3969-3980] investigated the possibilities of strengthening paper products by means of native nanocellulose and sorbitol plasticised nanocellulose. The mechanical properties of the paper as well as the barrier properties and thermal stability have been enhanced by the addition of nanocellulose. CNF and CNC were used as reinforcement means for coating Chinese paper, i.e. a material commonly used for surface consolidation of historical objects (e.g. books, maps, documents, prints and paintings). Chinese paper treated with CNF and CNC was characterised by higher flexural strength, tensile strength and higher tearing strength. Nanocellulose additives also increased the surface smoothness and barrier properties of coated paper [Nordic Pulp & Paper Research Journal, 29(1), 156-166]. The CNC protection of oil paintings increased their dimensional stability. In addition, the coating applied to oil paintings coated with CNC maintained transparency even at high content (30%) of CNC [Nanocomposites, 1(4), 195-203].

In turn, nanocellulose modified with siloxane-methacrylates is treated as a potential factor reducing water sorption in wood [Progress in Organic Coatings, 73, 128-136]. CNC modified with a cationic surfactant introduced into the coating system resulted in the improvement of barrier properties and optical properties of nanocomposite coatings [Progress in organic coatings, 93, 17-22]. The addition of CNC and CMF (cellulose microfibril) increased the scratch resistance of the wood surface. Scratch resistance of the external coating has been increased by up to 25% [Reactive and Functional Polymers, 85, 214-220].

From the patent CN107779122A, a solution for the production of starch glue containing nanocellulose is known. Such a binder was characterised by good water resistance, good stability during storage, excellent initial adhesion, good adhesion, good flowability and good resistance to coagulation. Preferably, the cross-linking agent may contain polyacrylamides, triethanolamines, one or more silanes containing epoxy groups. According to the patent, the agent is not used as a hydrophobising and surface consolidating agent, but as a binding substance with increased water resistance.

In the literature on the subject there are available studies focused on the use of nanocellulose and starch for the production of resins based on nanocellulose and biodegradable packaging with increased strength properties (CN104098882A, WO2013133436A1). These solutions are characterised by low durability, due to the foreseen, specifically determined life cycle time of the product.

Agent for the preservation of wooden historical objects and a method of its production according to the invention, is based on introduction into the wood, or applying on to its surface, an agent containing a mixture of starch and/or cationic starch and/or carboxymethyl cellulose, and nanocellulose, all modified *in situ* by alkoxysilane. The effect of protection with an agent for preservation of wooden historical objects is consolidation of the damaged surface of wood, increased strength properties of the entire wooden object and increased hydrophobic properties (i.e. resistance to further erosion caused by hygroscopic and liquid water) of wooden historical objects, in particular those exposed to atmospheric factors. The unexpected increase of hydrophobic properties of protected historical wood increased its resistance to photolytic degradation and to wood inhabiting fungi.

Preferably, the starch and/or cationic starch and/or carboxymethyl cellulose content is between 0.1% and 25% (w/w). In an advantageous embodiment, cationic starch and/or carboxymethyl cellulose can be used.

Preferably, the agent comprises nanocellulose (crystalline, fibrous, bacterial) in amount of 0.01% to 10%. Preferably, the alkylalkoxysilane content is from 0.01% to 25%. As alkoxysilane tetramethoxy-, tetraethosilane and/or alkyltrimethoxy-, alkyltriethoxysilane with an alkyl side chain containing from 1 to 8 carbon atoms should be used. Polar solvent, especially water, completes the composition of the preservative up to 100%. To increase the effect, the agent may contain a base that changes the pH of the solution above 7 (e.g. NaOH).

Preferably, to increase the effect, the formulation comprises a catalyst in the form of acetylacetonates (e.g. aluminium acetylacetonate) in amounts from 0.000% to 5%.

Preferably, the method of producing of an agent for wood preservation is based on heating and gluing starch into which alkoxysilanes, or a mixture of them, and nanocellulose are introduced. In order to increase the effect, a pH regulating base and/or catalysts are introduced in the protection agent.

The method of producing of an agent for the preservation of wooden historical objects according to the invention, is based on combining of starch and/or cationic starch and/or carboxymethyl cellulose with nanocellulose, and modifying

in situ with appropriate silanes chosen from: tetramethoxysilane and/or tetraethoxysilane and/or alkyltrimethoxysilane with a carbon chain containing 1 to 8 carbon atoms and/or alkyltriethoxysilane with a carbon chain containing 1 to 8 carbon atoms, in the presence of suitable catalysts and at pH> 7. An agent for preservation is characterised by the use of a mixture for wood impregnation prepared in accordance with the method described above. The method of impregnation of historical objects can be realised by using simple surface methods (e.g. soaking, immersion, lubrication) or deep methods (pressure methods).

In particular, the preparation of an agent for the preservation of wooden historical objects according to the invention, is based on gluing at a temperature of 50 to 85°C, preferably at 75°C, a mixture containing from 0.1% to 25% (w/w) of starch, in particular in the presence of additive no less than 0.3% w/w sodium hydroxide, and modification of starch with alkoxysilane, the amount of which should be from 0.01% to 25%. As alkoxysilanes tetramethoxy-, tetraethoxysilane and/or alkyltrimethoxy- and/or alkyltrimethoxysilane are used, with an alkyl side chain containing 1 to 8 carbon atoms, in particular methyltrimethoxysilane and nanocellulose in the amount of 0.01 to 10% w/w at pH> 7.

The advantage of the invention is that the agent for preservation increases the hydrophobicity and dimensional stability of the preserved wood. The advantage of the invention is also that the agent for preservation consolidates the surface of the damaged wood. Unlike the previously used means for consolidation of historical wood, as a result of the proposed solution, no significant increase in the mass of the preserved object was noted. The advantage of the invention is that the agent protects historical objects against biological factors without the need to use typical biocidal substances. The advantage of the invention is that the agent protects historical objects against UV radiation by applying a transparent coating. The advantage of the invention is that the agent is simple to produce, as it is obtained by combining the ingredients under controlled reaction conditions (pH>7 and temperature 50-100°C) in situ. The advantage of the invention is that, depending on the amount of substances used, it is possible to control the depth of penetration of the agent in to the historical wood. The advantage of the invention is that the protected wooden historical objects will have increased resistance to UV radiation, thus the colour of wood and polychrome layers will be characterised by greater durability. The advantage of the invention is that the protected wooden historical objects will have increased resistance to wood inhabiting fungi, resulting from the significantly increased hydrophobicity of the protected wood.

The solution according to the invention, is presented in the embodiments.

### Example 1

An agent for the preservation of wooden historical objects and a method of its production
according to the invention, is based on introduction into the wood, or applying on to its surface, an agent containing a mixture of starch and fibrous nanocellulose, modified with alkylalkoxysilane. The effect of the agent for the preservation of wooden historical objects is to consolidate the damaged surface of wood, increase the strength properties of the entire wooden object and increase the hydrophobic properties (i.e. protection against further erosion caused by hygroscopic and liquid water) of wooden historical objects, in particular those exposed to atmospheric factors. The unexpected increase of hydrophobic properties of protected historical wood increase its resistance to photolytic degradation and to wood inhabiting fungi.

The starch content in the agent for preservation is 5% w/w, and the agent for preservation contains fibrous nanocellulose in an amount of 0.05% and methyltrimethoxysilane in an amount of 2.5% w/w, in a polar solvent - i.e. in water, supplementing the agent for preservation up to 100%. To increase the effect, the agent contains NaOH which changes the pH of the solution above 7

The method of producing an agent for the preservation of wooden historical objects according to the invention, is based on gluing of the starch at a temperature not lower than 75°C, mixture containing 5% w/w starch in the presence of 0.3% w/w sodium hydroxide and starch is modified with methyltrimethoxysilane (2.5% w/w) and fibrous nanocellulose (0.5% w/w) at pH> 7.

An agent for preservation is characterised by the use of a mixture for wood impregnation prepared in accordance with the method described above. The method of impregnation of historical objects can be realised by using simple surface methods (e.g. soaking, immersion, lubrication) or deep methods (pressure methods).

The surface of the preserved material was characterised by a high degree of consolidation and increased hydrophobicity in relation to unpreserved wood. The applied preservation method allowed to increase the strength of the material by 18% compared to unprotected material. The wetting angle of the surface of the preserved material according to example 1 was 117°, while for the unpreserved material, the value could not be measured due to the very rapid penetration of water into the material.

The surface of cellulose material was protected with aqueous starch mixture (5% w/w) in the presence of sodium hydroxide (0.3% w/w), applied at elevated temperature (75°C) for gluing and modified with methyltrimethoxysilane (2.5% w/w) and the addition of nanocellulose (0.5% w/w).

### Example 2

An agent for the preservation of wooden historical objects and a method of its production according to the invention, is based on introduction into the wood, or applying on to its surface, an agent containing a mixture of starch and nanocellulose fibre, modified with alkylalkoxysilane. The effect of protection with an agent for the preservation of wooden historical objects is consolidation of the damaged surface of wood, increased strength properties of the entire wooden object and increased hydrophobic properties (i.e. resistance to further erosion caused by hygroscopic and liquid water) of wooden historical objects, in particular those exposed to atmospheric factors. The unexpected increase of hydrophobic properties of protected historical wood increased its resistance to photolytic degradation and to wood inhabiting fungi.

The starch content in the agent for preservation is 5% w/w, and the agent for preservation contains fibrous nanocellulose in an amount of 0.5% and methyltrimethoxysilane in an amount of 1.25% w/w, as well as 0.3% w/w sodium hydroxide contained in a mixture in a polar solvent - water, supplementing the agent for preservation up to 100%. The pH of the solution is above 7.

The method of producing an agent for the preservation of wooden historical objects according to the invention is based on gluing of the starch at a temperature not lower than 75°C, mixture containing 5% w/w starch in the presence of 0.03% w/w sodium hydroxide and starch is modified with methyltrimethoxysilane (1.25% w/w) and nanocellulose (0.05% w/w) at pH> 7.

The surface of the preserved material was characterised by a high degree of consolidation and increased hydrophobicity in relation to unpreserved material. The applied preservation method allowed to increase the strength of the material by 15% compared to unprotected material. The wetting angle of the surface of the preserved material according to example 2 was 110°, while the unpreserved material value could not be measured due to the very rapid penetration of water into the material.

### Example 3

An agent for the preservation of wooden historical objects and a method of its production according to the invention, is based on introduction into the wood, or applying on to its surface, an agent containing a mixture of starch and crystalline nanocellulose, modified with alkylalkoxysilane, The effect of protection with an agent for the preservation of wooden historical objects is consolidation of the damaged surface of wood, increased strength properties of the entire wooden object and increased hydrophobic properties (i.e. resistance to further erosion caused by hygroscopic and liquid water) of wooden historical objects, in particular those exposed to atmospheric factors. The unexpected increase of hydrophobic properties of protected historical wood increased its resistance to photolytic degradation and to wood inhabiting fungi.

The starch content in the agent for preservation is 5% w/w, and the agent for preservation contains crystalline nanocellulose in an amount of 0.5% and methyltrimethoxysilane in an amount of 1.25 % w/w, as well as 0.3% w/w sodium hydroxide contained in a mixture in a polar solvent - water, supplementing the agent for preservation up to 100%. The pH of the solution is above 7.

The method of producing an agent for the preservation of wooden historical objects according to the invention, is based on gluing of the starch at a temperature not lower than 75°C, mixture containing 5% w/w starch in the presence of 0.3% w/w sodium hydroxide and starch is modified with methyltrimethoxysilane (2.5% w/w) and nanocellulose (0.5% w/w) at pH> 7.

The surface of wood with a high degree of lignocellulosic tissue damage due to biotic factors, **previously prepared,** was protected with with an aqueous starch mixture (5% w/w) in the presence of sodium hydroxide (0.3% w/w), applied to gluing at elevated temperature (75°C) and modified with methyltrimethoxysilane (2.5% w/w). A 0.6 mm thick coating has been applied to the wood. The surface of the preserved wood was characterised by a high degree of consolidation and increased hydrophobicity in relation to unpreserved wood. The applied preservation method allowed to increase the strength of the material by 10% compared to unprotected wood. The wetting angle of the surface of preserved wood according to example 1 was 88°, whereas for wood preserved only with starch the wetting angle was 60°. The water penetration into the wood was so fast that the wetting angle could not be measured.

## Claims

1. An agent for the preservation of wooden historical objects, **characterized in that** it comprises starch and/or cationic starch and/or carboxymethylcellulose, and nanocellulose, all modified *in situ* with alkoxysilanes selected from tetramethoxysilanes and/or tetraethoxysilanes and/or alkyltrimethoxysilanes with a carbon chain containing from 1 to 8 carbon atoms and/or alkyltriethoxysilanes with a carbon chain containing from 1 to 8 carbon atoms.

2. An agent according to claim 1, **characterized in that** the content of starch is from 0.1% to 25% (w/w), nanocellulose crystalline in the amount of 0.01% to 10%, alkoxysilane content is from 0.01% to 25%, and the mixture is placed in a polar solvent, particularly water, supplementing the composition of the agent for the preservation up to 100%.

3. An agent according to claim 1, **characterized in that** the content of starch is from 0.1% to 25% (w/w), nanocellulose fibrous in the amount of 0.01% to 10%, alkoxysilane content is from 0.01% to 25%, and the mixture is placed in a polar solvent, particularly water, supplementing the composition of the agent for the preservation up to 100%.

4. An agent according to claim 1 or 2 or 3, **characterized in that** it comprises a base that changes the pH of the solution above 7.

5. An agent according to claim 4, **characterized in that** the agent comprises NaOH.

6. An agent according to claim 1 or 2 or 3 or 4 or 5 **characterized in that** it comprises a catalyst in the form of aluminium acetylacetonate in amount from 0.000% to 5%.

7. An agent according to claim 1, **characterized in that** the nanocellulose comprised therein is cellulose selected from crystalline or fibrous.

8. A method of producing an agent for preservation of wooden historical objects according to invention, **characterized in** combining of starch and/or cationic starch and/or carboxymethyl cellulose with nanocellulose, and modifying *in situ* with appropriate silanes selected from: tetramethoxysilane and/or tetraethoxysilane and/or alkyltrimethoxysilane with a carbon chain containing from 1 to 8 carbon atoms and/or alkyltriethoxysilane with a carbon chain containing from 1 to 8 carbon atoms, in the presence of catalyst - aluminium acetylacetonate and at pH> 7 conditions.

9. A method according to claim 8, **characterized in that** the production of an agent for preservation of wooden historic objects according to the invention, is based on gluing at a temperature from 50 to 85°C a mixture containing from 0.1% to 25% (w/w) starch, an addition of not less than 0.3% w/w of sodium hydroxide and and modifying the starch with alkoxysilane, wherein the amount of introduced alkoxysilane is from 0.01% to 25%, and as a alkoxysilane are used tetramethoxy-, tetraethosilane and/or alkyltrimethoxy-, alkyltriethoxysilane, with alkyl side chain containing from 1 to 8 carbon atoms, and nanocellulose in an amount of 0.01 to 10% w/w at pH> 7 conditions.

10. A method according to claim 9, **characterized in that** the temperature is 75°C.

11. A method according to claim 8 or 9 or 10 **characterized in that** native starch or cationic starch are used.

12. A method according to claim 8 or 9 or 10 **characterized in that** the starch is wholly or partly replaced by carboxymethyl cellulose.

## Patentansprüche

1. Mittel zur Konservierung historischer Holzobjekte, **dadurch gekennzeichnet, dass** es Stärke und/oder kationische Stärke und/oder Carboxymethylcellulose sowie Nanocellulose umfasst, die sämtlich in situ mit Alkoxysilanen modifiziert sind, ausgewählt aus Tetramethoxysilan und/oder Tetraethoxysilan und/oder Alkyltrimethoxysilanen mit einer Kohlenstoffkette mit 1 bis 8 Kohlenstoffatomen und/oder Alkyltriethoxysilanen mit einer Kohlenstoffkette mit 1 bis 8 Kohlenstoffatomen.

2. Mittel nach Anspruch 1, **dadurch gekennzeichnet, dass** der Gehalt an Stärke 0,1 Gew.-% bis 25 Gew.-%, der Gehalt an kristalliner Nanocellulose 0,01 % bis 10 % und der Gehalt an Alkoxysilan 0,01 % bis 25 % beträgt und dass das Gemisch in einem polaren Lösungsmittel, insbesondere Wasser, vorliegt, das die Zusammensetzung des Mittels zur Konservierung auf 100 % ergänzt.

3. Mittel nach Anspruch 1, **dadurch gekennzeichnet, dass** der Gehalt an Stärke 0,1 Gew.-% bis 25 Gew.-%, der Gehalt an fibrillärer Nanocellulose 0,01 % bis 10 % und der Gehalt an Alkoxysilan 0,01 % bis 25 % beträgt und dass das Gemisch in einem polaren Lösungsmittel, insbesondere Wasser, vorliegt, das die Zusammensetzung des Mittels zur Konservierung auf 100 % ergänzt.

4. Mittel nach Anspruch 1, 2 oder 3, **dadurch gekennzeichnet, dass** es eine Base umfasst, die den pH-Wert der Lösung auf einen Wert über 7 erhöht.

5. Mittel nach Anspruch 4, **dadurch gekennzeichnet, dass** das Mittel NaOH umfasst.

6. Mittel nach Anspruch 1, 2, 3, 4 oder 5, **dadurch gekennzeichnet, dass** es einen Katalysator in Form von Aluminiumacetylacetonat in einer Menge von 0,000 % bis 5 % umfasst.

7. Mittel nach Anspruch 1, **dadurch gekennzeichnet, dass** die darin enthaltene Nanocellulose eine Cellulose ist, die aus kristalliner oder fibrillärer Cellulose ausgewählt ist.

8. Verfahren zur Herstellung eines Mittels zur Konservierung historischer Holzobjekte gemäß der Erfindung, **dadurch gekennzeichnet, dass** Stärke und/oder kationische Stärke und/oder Carboxymethylcellulose mit Nanocellulose kombiniert und in situ mit geeigneten Silanen modifiziert werden, die ausgewählt sind aus: Tetramethoxysilan und/oder Tetraethoxysilan und/oder Alkyltrimethoxysilan mit einer Kohlenstoffkette mit 1 bis 8 Kohlenstoffatomen und/oder Alkyltriethoxysilan mit einer Kohlenstoffkette mit 1 bis 8 Kohlenstoffatomen, in Gegenwart eines Katalysators - Aluminiumacetylacetonat - und unter Bedingungen mit einem pH-Wert > 7.

9. Verfahren nach Anspruch 8, **dadurch gekennzeichnet, dass** die Herstellung eines Mittels zur Konservierung historischer Holzobjekte gemäß der Erfindung auf dem Verkleistern eines Gemisches bei einer Temperatur von 50 bis 85 °C basiert, wobei das Gemisch 0,1 Gew.-% bis 25 Gew.-% Stärke und einen Zusatz von mindestens 0,3 Gew.-% Natriumhydroxid enthält, und auf dem Modifizieren der Stärke mit Alkoxysilan, wobei die Menge des eingebrachten Alkoxysilans 0,01 % bis 25 % beträgt und als Alkoxysilan Tetramethoxysilan, Tetraethoxysilan und/oder Alkyltrimethoxysilan, Alkyltriethoxysilan mit einer Alkylseitenkette mit 1 bis 8 Kohlenstoffatomen verwendet werden, sowie Nanocellulose in einer Menge von 0,01 Gew.-% bis 10 Gew.-%, unter Bedingungen mit einem pH-Wert > 7.

10. Verfahren nach Anspruch 9, **dadurch gekennzeichnet, dass** die Temperatur 75 °C beträgt.

11. Verfahren nach Anspruch 8, 9 oder 10, **dadurch gekennzeichnet, dass** native Stärke oder kationische Stärke verwendet werden.

12. Verfahren nach Anspruch 8, 9 oder 10, **dadurch gekennzeichnet, dass** die Stärke vollständig oder teilweise durch Carboxymethylcellulose ersetzt wird.

## Revendications

1. Un agent pour la préservation d'objets historiques en bois, **caractérisé en ce qu'**il comprend de l'amidon et/ou de l'amidon cationique et/ou de la carboxyméthylcellulose, et de la nanocellulose, tous modifiés in situ/avec des alcoxysilanes choisis parmi des tétraméthoxysilanes et/ou des tétraéthoxysilanes et/ou des alkyltriméthoxysilanes présentant une chaîne carbonée contenant de 1 à 8 atomes de carbone et/ou des alkyltriéthoxysilanes présentant une chaîne carbonée contenant de 1 à 8 atomes de carbone.

2. Un agent selon la revendication 1, **caractérisé en ce que** la teneur en amidon est comprise entre 0,1 % et 25 % (p/p), la nanocellulose cristalline est présente à une quantité de 0,01 % à 10 %, la teneur en alcoxysilane est comprise entre 0,01 % et 25 %, et le mélange est placé dans un solvant polaire, en particulier de l'eau, complétant la composition de l'agent de préservation jusqu'à 100 %.

3. Un agent selon la revendication 1, **caractérisé en ce que** la teneur en amidon est comprise entre 0,1 % et 25 % (p/p), la nanocellulose fibreuse est présente à une quantité de 0,01 % à 10 %, la teneur en alcoxysilane est comprise entre 0,01 % et 25 %, et le mélange est placé dans un solvant polaire, en particulier de l'eau, complétant la composition de l'agent de préservation jusqu'à 100 %.

4. Un agent selon la revendication 1, 2 ou 3, **caractérisé en ce qu'**il comprend une base qui modifie le pH de la solution au-dessus de 7.

5. Un agent selon la revendication 4, **caractérisé en ce que** l'agent comprend du NaOH.

6. Un agent selon la revendication 1 ou 2 ou 3 ou 4 ou 5 **caractérisé en ce qu'**il comprend un catalyseur sous la forme d'acétylacétonate d'aluminium en quantité allant de 0.000% à 5%.

7. Un agent selon la revendication 1, **caractérisé en ce que** la nanocellulose qui y est comprise est une cellulose choisie parmi la cellulose cristalline ou fibreuse.

8. Un procédé de production d'un agent pour la conservation d'objets historiques en bois selon l'invention, **caractérisé par** la combinaison d'amidon et/ou d'amidon cationique et/ou de carboxyméthylcellulose avec de la nanocellulose, et la modification in situ avec des silanes appropriés choisis parmi: le tétraméthoxysilane et/ou le tétraéthoxysilane et/ou l'alkyltriméthoxysilane présentant une chaîne carbonée contenant de 1 à 8 atomes de carbone et/ou l'alkyltriéthoxysilane présentant une chaîne carbonée contenant de 1 à 8 atomes de carbone, en présence de catalyseur - acétylacétonate d'aluminium et dans des conditions de pH > 7.

9. Un procédé selon la revendication 8, **caractérisé en ce que** la production d'un agent pour la conservation d'objets historiques en bois selon l'invention est basée sur le collage à une température allant de 50 à 85°C d'un mélange contenant de 0.1% à 25% (p/p) d'amidon, un ajout d'au moins 0.3% p/p d'hydroxyde de sodium et la modification de l'amidon avec de l'alkoxysilane, dans lequel la quantité d'alkoxysilane introduit est de 0.01% à 25%, et comme alkoxysilane sont utilisés le tétraméthoxy-, le tétraéthoxysilane et/ou l'alkyltriméthoxy-, l'alkyltriéthoxysilane, avec une chaîne latérale alkyle contenant de 1 à 8 atomes de carbone, et de la nanocellulose en une quantité de 0.01 à 10% p/p dans des conditions de pH > 7.

10. Un procédé selon la revendication 9, **caractérisé en ce que** la température est de 75°C.

11. Un procédé selon la revendication 8, 9 ou 10, **caractérisé en ce que** de l'amidon natif ou de l'amidon cationique est utilisé.

12. Un procédé selon la revendication 8, 9 ou 10, **caractérisé en ce que** l'amidon est totalement ou partiellement remplacé par de la carboxyméthylcellulose.
